Europäisches Patentamt

**European Patent Office**

**Office européen des brevets**

(19)

(11) Publication number: **0 246 256 B1**

# EUROPEAN PATENT SPECIFICATION

(12)

(45) Date of publication of the patent specification:
**10.01.90**

(51) Int. Cl.⁴: **B 27 N 3/00** // B27N3/02, B27N3/04

(21) Application number: **86906340.4**

(22) Date of filing: **20.10.86**

(86) International application number:
**PCT/FI 86/00119**

(87) International publication number:
**WO 87/02929 (21.05.87** Gazette 87/11)

(54) **PROCESS FOR THE MANUFACTURE OF VEGETABLE-FIBRE BASED BOARDS, IN PARTICULAR PARTICLE BOARDS OR FIBRE BOARDS.**

(30) Priority: **13.11.85 FI 854469**

(43) Date of publication of application:
**25.11.87 Bulletin 87/48**

(45) Publication of the grant of the patent:
**10.01.90 Bulletin 90/2**

(84) Designated Contracting States:
**AT BE DE FR GB IT NL SE**

(56) References cited:
**DE-A- 2 315 145**
**US-A- 4 212 704**

(73) Proprietor: **RAISION TEHTAAT OY AB, P.O. Box 101,
SF-21201 Raisio (FI)**

(72) Inventor: **NIINIVAARA, Veikko, Maskulantie A 5,
SF-21250 Masku (FI)**
Inventor: **HALONEN, Seppo, Kastevuorenkuja 3 M 196,
SF-02360 Espoo (FI)**
Inventor: **NURMI, Kari, Valopolku 1, Kerrola
SF-21200 Raisio (FI)**

(74) Representative: **Blake, John Henry Francis et al,
BROOKES AND MARTIN High Holborn House 52/54 High
Holborn, London WC1V 6SE (GB)**

## Description

The subject of the present invention is a process for the manufacture of vegetable-fibre based boards, in which process the basic material of the board is treated with adhesive, the adhesive-treated material is spread as a board blank, and the blank is hot-pressed into a finished board, whereby the reactions of binding and hardening of the adhesive take place substantially during the hot-pressing. Here, in its wide sense, vegetable fibre means different fibres or chips derived from vegetable fibres, including, e.g., wood as chips or as defibrated by various methods. The invention is expressly concerned with processes in which the adhesive fraction in the board consists of an adhesive that includes formaldehyde, such as urea-formaldehyde adhesive urea-melamine-formaldehyde adhesive, and phenol-formaldehyde adhesive. Of these adhesives, the one that is used most commonly is urea-formaldehyde adhesive (resin), which is used in particular for the manufacture of particle board.

Formaldehyde-based resin adhesives are used in the manufacture of various vegetable-fibre based boards because of the good physical properties of the board, obtained by means of the adhesive, as well as because of the reasonable cost of the adhesive. In respect of the said boards and their manufacture, problems have, however, been caused by the formaldehyde, which constitutes a part in the adhesive fraction in the board. If a favourable composition of the adhesive and an optimal dosage of the adhesive, in view of the properties of strength of the board, are aimed at, after the stage of hardening of the adhesive, a relatively high concentration of free formaldehyde unavoidably remains in the board.

In view of the binding and hardening reactions of the adhesive fraction, it is preferable that there is a certain excess quantity of the formaldehyde component of the adhesive mixture. Most of this excess quantity is removed out of the board during its manufacture, above all at the stage of opening of the hot press included in the manufacturing process. At other stages of the manufacturing process, formaldehyde may also be liberated to the environment, but to a lower extent than in connection with the hot-pressing. The formaldehyde liberated right during the manufacture of the board does, however, not create insurmountable obstacles, for the equipment of manufacture can be provided with a purposeful ventilation system in order to keep the air in the working environment clean.

An essential problem is, however, formed by formaldehyde at the sites of use of the boards, where the formaldehyde still remaining in the board escapes from the board slowly into the surrounding air. Formaldehyde may also be liberated from the adhesive as a result of decomposition reactions.

Attempts have been made to find various solutions for the said problems, of which solutions the most natural one is reduction in the excess quantity of formaldehyde in relation to the other component of the adhesive. Another means is reduction in the overall quantity of adhesive in relation to the board material. The former operation, however, deteriorates the optimal hardening reactions of the adhesive, whereby the adhesive present in the finished board does not reach its best possible strength. When the second suggested operation is applied additionally, i.e. when the quantity of adhesive is reduced in relation to the board material, problems arise in respect of the ultimate strength of the board.

As a compromise between strength properties and formaldehyde emission, in the manufacture of particle boards when using urea formaldehyde as the adhesive fraction, at present a molar ratio of HCHO to urea = about 1.1 to 1.2 has been chosen, whereby the adhesive still obtains a reasonable strength on hardening. If the ratio is reduced from this further, a steep deterioration takes place in the strength of the adhesive. Earlier, molar ratios of HCHO to urea = about 1.4 to 1.6 were used for urea-formaldehyde adhesive, which ratio was earlier chosen expressly in order to obtain a reliable result in view of strength.

With urea-formaldehyde adhesive (UF resin), the dosage of adhesive used in the manufacture of particle board is usually about 8 to 12 per cent by weight of the quantity of chips (dry matter/dry matter). The following can be considered typical conditions of manufacture:

Adhesive mixtures:

– Surface chips;

| | |
|---|---|
| UF resin (65% dry matter) | 100 parts by weight |
| Paraffin emulsion (50% d.m.) | 8 – » – |
| Hardening agent | 3 – » – |
| Water | 15 – » – |

The hardening agent for the adhesive fraction for surface chips mentioned above has typically a composition as follows:

| | |
|---|---|
| Salammoniac | 10 parts by weight |
| Urea | 10 – » – |
| Water | 80 – » – |

– Middle chips;

| | |
|---|---|
| UF resin (65% dry matter) | 100 parts by weight |
| Paraffin emulsion (50% d.m.) | 6 – » – |
| Hardening agent | 8 – » – |
| Ammonia (25%) | 0 – » – |
| Water | 5 – » – |

The hardening agent for the adhesive fraction for the middle chips has typically a composition as follows:

| | |
|---|---|
| Salammoniac | 15 parts by weight |
| Water | 85 – » – |

The dosage of the adhesive varies depending on the layers of chips ordinarily within the following limits (the numbers indicate the quantity of dry adhesive as percentages of dry chips):

| | |
|---|---|
| 3-layer board: | |
| surface chips | 10 to 12% |
| middle chips | 7 to 9% |
| 1-layer board | 8 to 10% |

In respect of the moisture of the chips, the following values are aimed at by the time when the stage of treatment with adhesive is reached:

| middle chips | 0 to 2% |
| surface chips | 2 to 6% |

With urea-formaldehyde adhesive, the conditions of the hot-pressing stage of the board are typically within the following limits:

| Temperature | 150 to 200°C |
| Compression time | 10 to 14 s/mm of board |
| Pressure | 2 to 3 mPa |

When urea-melamine-formaldehyde adhesive (MUF resin) is used, the other components of the adhesive fraction as well as the adhesive dosage differ from the above to some extent. Ordinarily the following conditions are followed:

Adhesive mixtures:

— Surface chips;

| MUF resin (66% dry matter) | 100 parts by weight |
| Paraffin emulsion (50% d.m.) | 6 — » — |
| Hardening agent | 5 — » — |
| Ammonia (25%) | — |
| Water | 15 — » — |

Hardening agent for surface chips:

| Salammoniac | 15 parts by weight |
| Water | 85 — » — |

— Middle chips;

| MUF resin | 100 parts by weight |
| Paraffin emulsion (59% d.m.) | 6 — » — |
| Hardening agent | 7 — » — |
| Water | 5 — » — |

The composition of the hardening agent for middle chips is usually as follows:

| Salammoniac | 15 parts by weight |
| Water | 85 — » — |

For the dosage of the adhesive, the following instructions are used (dry resin as percentages of dry chips):

The guide value is 12 to 15% if the aim is V 100-glueing (DIN-68763-Bl 3).

In respect of the moisture of the chips, the following guide values are aimed at before the stage of treatment with adhesive:

| Middle chips | 0 to 2% |
| Surface chips | 2 to 4% |

In the hot-pressing, the following conditions are used:

| Temperature | 150 to 200°C |
| Time | 10 to 14 s/mm of board |
| Pressure | 2 to 3.5 mPa |

When phenol-formaldehyde adhesive (PF resin) is used for the adhesive treatment of the board, the following conditions can be given as guide values:

Adhesive mixture (During adhesive treatment, water is added to the adhesive so as to control the viscosity and moisture of chips)

— Surface and middle chips;

| PF resin (50% dry matter) | 100 parts by weight |
| Water | 0 to 10 — » — |
| Hardening agent | 6 to 10 — » — |

As the hardening agent, 50% $K_2CO_3$ solution is used.

The dosage of the adhesive takes place in accordance with the following instructions (dry resin as percentages of the dry matter of chips):

| 1-layer board | 9 to 11% |
| 3-layer bord | |
| surface chips | 10 to 13% |
| middle chips | 8 to 10% |

In order to reduce the thickness swelling of the board, paraffin emulsion may be added to the board, which emulsion is sprayed during the manufacture of the board to the chips separately from the adhesive. The quantity of dosage of paraffin is 0.8 to 1.5% of solid wax, calculated on the weight of dry chips.

With phenol-formaldehyde adhesive, the conditions of the compression stage are preferably as follows:

| Temperature | 180 to 220°C |
| Time | at least 0.3 s/mm of board |
| Pressure | 2 to 3.5 mPa |

As further means of reducing emissions of formaldehyde, substances added to the board have been used, which react with free formaldehyde and immobilize it in the board. As such agents have been used, e.g., ammonia, urea, many organic amines, such as triethanolamine or diethylenetriamine, as well as organic nitriles. Finished boards have been coated with various combinations of substances, which contain agents that react with formaldehyde and thereby prevent access of formaldehyde to the environment.

In connection with the manufacture of boards, the added agents have, however, had the drawback of strong reactivity with formaldehyde, whereby these agents have competed with the other component in the adhesive fraction of the board in the reaction with formaldehyde. Owing to this, the reaction of hardening of the adhesive has been disturbed, and the strength achieved for the board has suffered. On the other hand, the coating method requires an additional operation, either in the manufacture of the board or when the board is coated at the site of use.

By means of the present invention, attempts have been made to find a solution for the drawbacks caused by free formaldehyde while following the operations model mentioned above, wherein an agent reacting with free formaldehyde is added to the board material. In order that a good result could be obtained, the additive has, however, in a way differing from prior art, been chosen so that it reacts with formaldehyde more slowly than the other component in the adhesive fraction, whereby no reaction competition situation detrimental to the strength of the adhesive can arise. The reactivity of the additive must, of course, be sufficient to immobilize the extra formaldehyde remaining from the reactions of hardening of the adhesive.

According to the invention, this result has been reached so that, in connection with the manufacture of board, besides a formaldehyde-based adhesive, starch modified to incorporate carbamate, ester or ether groups is added to the fibre material (the modification may be any one of those mentioned above or a mixture of two or all of them). It has been noticed that in particular, adhesives that contain carbamate modification or mainly the said modification react in the desired way in the manufacture of boards. It has not been noticed that these starch modifications disturb the reactions of hardening of adhesive, but they can immobilize formaldehyde reactively with a sufficiently high speed so that the concentration of free formaldehyde in a finished board is lowered to an acceptable level. It is to be noticed in particular that the process of the invention permits manufacture of board so that, in the adhesive fraction in the board, a molar ratio of the adhesive components advantageous in view of attaining of strength of the adhesive as well as a dosage of adhesive fraction sufficient in view of strength can be used. In spite of this, the emission of formaldehyde can be brought to an acceptable level. An additional advantage that is obtained by means of the process of the invention is an increased strength after the pre-pressing (cold-pressing) applied to the board blank after the spreading of the material.

Further, the starch derivatives described above have physical properties which make them usable, e.g., in a particle-board process, whereas, as a rule, it has not been noticed that starch derivatives have such properties. In practice, the particle-board process is very sensitive in respect of the water introduced into the process, and introduction of extra water into the process should be avoided. On the other hand, the viscosity of the chemical solutions added to the process must be within the correct range in order that they could be pumped by means of ordinary dosage pumps and in order that they should behave in the desired way in the adhesive treatment. It has been noticed that a suitable viscosity range is 50 to 10,000 cP/Brookfield (mPas). As a rule, starch derivative solutions adopt this range of viscosity in usual temperatures of use, 0 to 30°C, when their dry solids contents are within the range of 5 to 20%. The use of solutions as dilute as this, however, in practice, means an excessive quantity of additional water. The water quantity remains within permitted limits only when the dry solids content of the additional chemicals can be brought to the range of 25 to 72%. It has been noticed that this can be achieved in the processes in accordance with the invention by using carbamate, ester, and ether modifications of starch as additional chemicals.

Besides having the values of viscosity and dry solids content mentioned above, the starch derivatives used in the process in accordance with the invention must also be real solutions or colloids so that the particle sizes in the ready starch product must be smaller than 5 μm, preferably clearly smaller than 1 μm. In view of the preparation of the starch derivatives, it is further advantageous that the particle size of the starch raw-material is less than about 50 μm and preferably below 30 μm. The reduction of the particle size to the above values may take place during the preparation of the derivatives by means of various methods, which are described below. It has been noticed that the particle size of the derivative used in the treatment with adhesive has a clear significance for the reactivity of the derivative with formaldehyde.

Moreover, it has been noticed that, between the above three derivatives, carbamate, ester, and ether, there are differences in reacting in the particle board process with the adhesive fraction containing formaldehyde. It has been noticed that in particular carbamate reacts in the desired way in the hot-pressing stage in the board manufacture. In this manufacturing step, the carbamate derivatives react sufficiently rapidly with formaldehyde in order that the concentration of free formaldehyde should remain at a tolerable level in the finished board, but, on the other hand, they do not react excessively rapidly in order to compete with the reactions of hardening of the adhesive fraction proper. Under these circumstances, it is advantageous that starch modified expressly to carbamate is used, or a mixture of derivatives in which more than 50% of the DS-number, which represents the degree of modification, consists of carbamate. The remaining part of the derivative may consist of ester or ether of starch or of their mixture.

In the following, methods for the preparation of starch derivatives usable in the process of the present invention will be described.

Preparation of <u>starch ether</u>

Starch ether can be prepared by using, e.g., ethylene oxide, propylene oxide, or alkylglycidyltrimethylammonium chloride as reagents.

*Test 1:*

1500 g water and 1000 g wheat starch are charged into a reactor. Sodium hydroxide is added to the reactor so that the pH of the solution is 11.0 to 12.0. Ethylene oxide is charged into the reaction vessel as cautious additions totalling 150 g. In order to accelerate the reaction, 5 g sodium sulphate or sodium carbonate is also charged into the reactor, whereinafter the product is washed three times with distilled water so that the dry solids content of the product remains the same as at the beginning of the reaction. The DS number of the product was 0.02, and it was used for particle-board tests as such.

Preparation of <u>starch ester</u>

Starch ester can be prepared by using, e.g., acetic acid, acetic anhydride, chloracetic acid, maleic acid, maleic anhydride, fumaric acid, acetic ethenylester.

*Test 2:*

1500 g water and 1000 g wheat starch are charged into a reactor. Sodium hydroxide is added to the reactor so that the pH of the solution is 11.0 to 12.0. 260 g acetic ethenylester is charged into the reactor by cautiously dropping. In order to accelerate the reaction, 5 g sodium sulphate or sodium carbonate is added to the reactor. The reaction mixture is stirred for 8 h at 25 to 30°C, whereinafter the product is washed three times with distilled water so that the dry solids content of the product remains at the same level as when the reaction was started. The DS number of the product was 0.04, and it was used for particle-board tests as such.

Preparation of <u>starch carbamate</u>

Starch carbamate can be prepared by using substituted carbamide compounds, such as, e.g., acetylcarbamide, thiocarbamide, carbonyl diamide, as the reacting component.

*Test 3:*

4000 g liquid ammonia was pumped into the reaction vessel. 1000 g wheat starch and 400 g carbonyl diamide were added to the reaction vessel.

The reaction mixture was stirred for 8 h at −40°C, whereinafter the product was washed three times with distilled water and prepared to a solution whose dry solids content was about 40 per cent by weight. The DS number of the product was 0.06, and it was used for particle-board tests as such.

*Test 4:*

1500 g water and 1000 g wheat starch were charged into a reaction vessel. 350 g thiocarbamide and 10 g potassium acetate were added to the reaction vessel, to accelerate the reaction. The reaction mixture was stirred for 8 h at 25 to 30°C, whereinafter the product was washed three times with distilled water. The DS number of the product was 0.085, and it was used for tests as such.

*Test 5:*

1500 g water and 1000 g wheat starch were charged into a reaction vessel. 400 g carbonyl amide and 15 g potassium acetate were added to the reaction vessel, to accelerate the reaction. The reaction mixture was stirred for 9 h at 25 at 25 to 30°C, whereinafter the product was washed with distilled water three times. The DS number of the product was 0.080, and it was used for the tests as such.

*Test 6:*

The test was carried out in the same way as test 4, but the particle size of the product was reduced by means of a laboratory colloid mill from the range of 50 μm to the range below 2 μm. The product was washed and used for the tests in colloid form.

*Test 7:*

The test was carried out in the same way as test 1, but the reaction was continued after washing in the same way as in test 4, whereby a product was obtained whose DS number was 0.02 in respect of ether and 0.069 in respect of carbamate. The product was washed and used for the tests as such.

*Test 8:*

The test was carried out in the same way as test 3, but the particle size of the product was reduced from the range of 50 μm to the range below 2 μm by means of a laboratory colloid mill, and used for the tests in colloid form.

*Test 9:*

The test was carried out in the same way as test 5, but the product was brought, by means of heat treatment and a laboratory colloid mill, to a particle size below 1 μm, and its state resembled that of a real solution.

In the following example, manufacturing factors of particle board will be examined, the conduct of the starch derivatives prepared in the above tests 1 to 9 in the manufacture of particle board being studied in respect of the said factors. In connection with the manufacture of the boards, starch derivatives described in tests 1 to 9 were added as a quantity of 13 per cent of the quantity of adhesive (abs.dry/ abs.dry).

*Example 1*

Factors of manufacture of boards:
- bulk density 670 kg/m³
- thickness 16 mm
- molar ratio of resin HCHO to urea 1.2
- resin percentage: in middle chips adhesive 8% abs.dry/abs.dry, in surface chips 11% abs.dry/ abs.dry
- the boards were tested as per the standards SFS 3516 and DIN 52,360 to 52,365.

The results of the tests are given in the following table 1.

Table 1

| Test: | Added starch derivative: | | | | | | | | | Normal board (no starch) |
|---|---|---|---|---|---|---|---|---|---|---|
| | 1 | 2 | 3 | 4 | 5 | 6 | 7 | 8 | 9 | |
| Bending strength N/mm² | 13.9 | 13.5 | 13.8 | 13.7 | 13.7 | 14.2 | 13.9 | 14.1 | 14.0 | 14.2 |
| Transverse tensile strength N/mm² | 0.60 | 0.55 | 0.62 | 0.64 | 0.59 | 0.61 | 0.57 | 0.60 | 0.59 | 0.56 |
| Thickness swelling in 2 h water solution test % after the test | 6.2 | 6.4 | 6.0 | 5.9 | 6.1 | 6.3 | 6.0 | 5.8 | .6.1 | 5.8 |
| Formaldehyde content mg/100 g* (FESYP) | 9.7 | 8.5 | 7.6 | 7.3 | 7.3 | 7.5 | 6.5 | 6.3 | 6.1 | 22 |
| Moisture of boards % of dry weight | 9.6 | 8.1 | 8.6 | 8.7 | 9.3 | 8.1 | 8.7 | 8.6 | 8.1 | 9.5 |

In the following table 2, the formaldehyde content obtained on the basis of the test results is given as a function of dosage of starch.

Table 2

| Formaldehyde content mg/100 g (FESYP) | 6.3 | 6.9 | 7.2 | 7.5 | 9.1 | 10.5 | 13 |
|---|---|---|---|---|---|---|---|

| Dosage of starch derivative according to test 8, % of adhesive abs.dry/abs.dry | 13 | 12 | 11 | 10 | 9 | 8 | 7 |
|---|---|---|---|---|---|---|---|

* Formaldehyde content measured by the method recommended by the European Federation of Manufacturers of Particle Board (Fédération Européenne des Syndicats de Fabricants de Panneaux de Particule) CEN 120 (Comité Européen de Normalisation – European Committee of Stardardization)

The following table 3 gives the results of the tests carried out in order to establish the viscosity values of the different modifications within different particle-size ranges at a certain dry solids content.

Table 3

| Test | 1 | 2 | 3 | 4 | 5 | 7 |
|---|---|---|---|---|---|---|
| Viscosities of dispersion cP (Brookfield) (mPas) dry solids cont. 30% aver. particle size 50 μm | 400 | 430 | 200 | 350 | 280 | 260 |
| Viscosities of solution cP (Brookfield) (mPas) average particle size below 2 μm dry solids content 50% | 122,000 | 92,000 | 5,000 | 8,000 | 9,500 | 11,000 |

The test results are the mathematical averages of the test values of ten parallel boards.

As comes out from the results of table 1, the starch derivatives prepared in accordance with the tests 1 to 9 give very good properties of the board as compared with a board manufactured in a conventional way, without addition of starch. With these additions of starch derivatives, it is in particular possible to manufacture board of a low formaldehyde content.

It is also worth noticing that in the tests in which carbamate has been used for the modification of starch, in the board tests, the formaldehyde content is lower than with ester or ether modifications.

According to the results in table 2, it is noticed that the emittable and free formaldehyde content in the board becomes lower in accordance with the dosage quantity. It is noticed that in this test series the so-called E1 limit is a dosage of about 9% in the adhesive (abs.dry/abs.dry).

From table 3, it can be seen surprisingly that within small particle-size ranges it is the carbamate modifications that have lower viscosities than esters and ethers. Moreover, it is noticed that a mixed modification of ether and ester also has a low and usable viscosity.

Moreover, it can be seen from the results of table 1 that small particle size also has a favourable effect on the lowering of the formaldehyde content.

In the above description of the invention, the description has dealt with the manufacture of particle board, but for a person skilled in the art it is obvious how the invention can also be applied to the manufacture of boards out of other vegetable fibre materials, such as sawdust, straw, and bagasse.

The starch derivatives can be added in connection with ordinary manufacture of particle board either as mixed with the adhesive fraction proper or as separate in connection with the treatment of the chips with adhesive. When the addition takes place as separate, it is preferable that the temperature of the starch has been raised, an advantageous range being 50 to 100°C. Good results are, however, also obtained even if the starch derivative is added at a lower temperature.

**Claims**

1. Process for the manufacture of vegetable-fibre boards, such as particle board, in which process the fibre material is treated with a formaldehyde-based adhesive, the adhesive-treated fibre material is spread as a board blank, and the blank is hot-pressed into a board, characterized in that besides the dosage of a formaldehyde-based adhesive, starch modified to incorporate carbamate, ester or ether groups, or a mixture of these modifications, is added to the fibre material.

2. Process as claimed in claim 1, characterized in that the dosage of formaldehyde-based adhesive is about 8 to 13 per cent by weight of the quantity of the fibre material, calculated dry matter to dry matter, and the dosage of modified starch is 0.5 to 40 per cent by weight, preferably 5 to 25 per cent by weight, of the quantity of the fibre material, dry matter to dry matter.

3. Process as claimed in claim 1 or 2, characterized in that starch is used that has been modified to incorporate carbamate, ester or ether, at a modification number DS 0.01 to 2.0.

4. Process as claimed in claim 3, characterized in that the amount of ester or ether modification provides not more than 50% of the numerical value of the DS number.

5. Process as claimed in any of the preceding claims 1 to 4, characterized in that the starch is added as a water solution or colloid containing 25 to 72 per cent of dry matter.

6. Process as claimed in any of the preceding claims 1 to 5, characterized in that the starch is added in admixture with the formaldehyde-based adhesive.

7. Process as claimed in any of the preceding claims 1 to 6, characterized in that the starch is added in connection with the adhesive treatment but separately from the addition of the formaldehyde-based adhesive.

8. Process as claimed in claim 7, characterized in that the starch is added in connection with the adhesive treatment at a temperature of 10 to 100°C, preferably 50 to 100°C.

9. Process as claimed in any of the preceding claims 1 to 8, characterized in that modified starch is used whose particle size was before modification less than about 50 µm, preferably less than 30 µm, and in the solution-like modified starch product less than 2 µm.

10. Process as claimed in any of the preceding claims 1 to 9, characterized in that a starch is used whose pH is within the range of 4 to 12.

11. Process as claimed in any of the preceding claims 1 to 10, characterized in that, besides the formaldehyde-based adhesive and the starch, auxiliary agents in themselves known are added to the fibre, such as hydrophobic agents.

12. Process as claimed in any of the preceding claims 1 to 11, characterized in that a modified starch product is used whose colloid or solution has a viscosity of at least 20 to 10,000 cP (Brookfield) (20 to 10,000 mPas).

**Patentansprüche**

1. Verfahren zum Herstellen von Platten aus pflanzlichem Fasermaterial, wie Spanplatten, bei dem das Fasermaterial mit einem Bindemittel auf Formaldehyd-Basis behandelt, das mit dem Bindemittel behandelte Fasermaterial als Plattenrohling ausgebreitet und der Rohling heiß zu einer Platte gepreßt wird, dadurch gekennzeichnet, daß dem Fasermaterial neben der Dosis an Bindemittel auf Formaldehyd-Basis Stärke zugesetzt wird, die modifiziert ist, so daß sie Carbaminat, Ester, Äthergruppen oder eine Mischung dieser Modifikationen enthält.

2. Verfahren nach Anspruch 1, dadurch gekennzeichnet, daß die Dosierung des Bindemittels auf Formaldehyd-Basis etwa 8 bis 13 Gew.-% der Menge des Fasermaterials, berechnet Trockenmasse gegen Trockenmasse und die Dosierung der modifizierten Stärke 0,5 bis 40 Gew.-%, vorzugsweise 5 bis 25 Gew.-% der Menge des Fasermaterials, Trockenmasse gegen Trockenmasse, beträgt.

3. Verfahren nach Anspruch 1 oder 2, dadurch gekennzeichnet, daß eine Stärke verwendet wird, die modifiziert ist, so daß sie Carbaminat, Ester oder Äther in einer Modifikationsnummer (DS) zwischen 0,01 und 2,0 enthält.

4. Verfahren nach Anspruch 3, dadurch gekennzeichnet, daß der Anteil an Ester oder Äther-Modifikationen nicht mehr als 50% des ziffernmäßigen Wertes der DS-Nummer ausmacht.

5. Verfahren nach einem der vorhergehenden Ansprüche 1, dadurch gekennzeichnet, daß die Stärke als Wasserlösung oder Kolloid mit einem Gehalt von 25 bis 72% Trockenmasse zugesetzt wird.

6. Verfahren nach einem der vorhergehenden Ansprüche 1 bis 5, dadurch gekennzeichnet, daß die Stärke in Mischung mit dem Bindemittel auf Formaldehyd-Basis zugesetzt wird.

7. Verfahren nach einem der vorhergehenden Ansprüche 1 bis 6, dadurch gekennzeichnet, daß die Stärke im Zusammenhang mit der Bindemittelbehandlung, aber getrennt von der Zugabe des Bindemittels auf Formaldehyd-Basis zugesetzt wird.

8. Verfahren nach Anspruch 7, dadurch gekennzeichnet, daß die Stärke im Zusammenhang mit der Bindemittelbehandlung bei einer Temperatur von 20 bis 100°C, vorzugsweise 50 bis 100°C zugesetzt wird.

9. Verfahren nach einem der vorhergehenden Ansprüche 1 bis 8, dadurch gekennzeichnet, daß eine modifizierte Stärke verwendet wird, deren Teilchengröße vor der Modifikation kleiner war als etwa 50 µm, vorzugsweise kleiner als 30 µm und beim lösungsartigen modifizierten Stärkeprodukt kleiner als 2 µm ist.

10. Verfahren nach einem der vorhergehenden Ansprüche 1 bis 9, dadurch gekennzeichnet, daß eine Stärke verwendet wird, deren pH-Wert innerhalb des Bereiches 4 bis 12 liegt.

11. Verfahren nach einem der vorhergehenden Ansprüche 1 bis 10, dadurch gekennzeichnet, daß neben dem Bindemittel auf Formaldehyd-Basis und der Stärke an sich bekannte Hilfsstoffe, wie hydrophobisierende Mittel den Fasern zugesetzt werden.

12. Verfahren nach einem der vorhergehenden Ansprüche 1 bis 11, dadurch gekennzeichnet, daß ein modifiziertes Stärkeprodukt verwendet wird, dessen Kolloid oder Lösung eine Viskosität von wenigstens 20 bis 10 000 cP (Brookfield) (20 bis 10 000 mPas) hat.

**Revendications**

1. Procédé de fabrication de panneaux de fibres végétales, tel qu'un panneau de particules, dans lequel le matériau fibreux est traité avec un adhésif à base de formaldéhyde, le matériau fibreux traité à l'adhésif est étalé sous la forme d'une ébauche de panneau, et l'ébauche est pressée à chaud en un panneau, caractérisé en ce que l'on ajoute au matériau fibreux, en plus de la quantité d'un adhésif à base de formaldéhyde, de l'amidon modifié pour comprendre des groupes carbamate, ester ou éther, ou un mélange de ces groupes.

2. Procédé selon la revendication 1, caractérisé en ce que la quantité de l'adhésif à base de formaldéhyde est d'environ 8 à 13% en poids de la quantité du matériau fibreux, calculée en matière sèche par rapport à matière sèche, et la quantité d'amidon modifié est de 0,5 à 40% en poids, de préférence 5 à 25% en poids, de la quantité du matériau fibreux, calculée en matière sèche par rapport à matière sèche.

3. Procédé selon la revendication 1 ou 2, caractérisé en ce que l'on utilise un amidon qui a été modifié pour comprendre carbamate, ester ou éther, avec une modification de nombre DS égal à 0,01 à 2,0.

4. Procédé selon la revendication 3, caractérisé en ce que la part de la modification ester ou éther ne fournit pas plus de 50% de la valeur numérique du nombre DS.

5. Procédé selon l'une quelconque des revendications précédentes 1 à 4, caractérisé en ce que l'amidon est ajouté sous la forme d'une solution aqueuse ou d'un colloïde contenant 25 à 72% de matière sèche.

6. Procédé selon l'une quelconque des revendications précédentes 1 à 5, caractérisé en ce que l'amidon est ajouté en mélange avec l'adhésif à base de formaldéhyde.

7. Procédé selon l'une quelconque des revendications précédentes 1 à 6, caractérisé en ce que l'amidon est ajouté conjointement au traitement par l'adhésif, mais séparément de l'addition de l'adhésif à base de formaldéhyde.

8. Procédé selon la revendication 7, caractérisé en ce que l'amidon est ajouté conjointement avec le traitement par l'adhésif, à une température de 10 à 100°C, de préférence 50 à 100°C.

9. Procédé selon l'une quelconque des revendications précédentes 1 à 8, caractérisé en ce que l'on utilise un amidon modifié dont la taille des particules est, avant modification, inférieure à environ 50 μm, de préférence inférieure à 30 μm et, dans le produit d'amidon modifié du type solution, inférieure à 2 μm.

10. Procédé selon l'une quelconque des revendications précédentes 1 à 9, caractérisé en ce que l'on utilise un amidon dont le pH se situe dans l'intervalle de 4 à 12.

11. Procédé selon l'une quelconque des revendications précédentes 1 à 10, caractérisé en ce que l'on ajoute aux fibres, en plus de l'adhésif à base de formaldéhyde et de l'amidon, des agents auxiliaires connus en soi, comme des agents hydrophobes.

12. Procédé selon l'une quelconque des revendications précédentes 1 à 11, caractérisé en ce que l'on utilise un amidon modifié dont la solution ou le colloïde a une viscosité d'au moins 20 à 10.000 cP (Brookfield) (20 à 10.000 mPas).